# EUROPÄISCHE PATENTSCHRIFT

(11) **EP 3 150 363 B1**
(45) Veröffentlichungstag und Bekanntmachung des Hinweises auf die Patenterteilung: **06.09.2023**
(21) Anmeldenummer: 16190320.8
(22) Anmeldetag: 11.07.2014
(51) Int. Cl.: B29C 70/46, B29C 70/08, B29C 70/22, B29C 48/05, B29C 48/152, F03D 1/06

(54) **VERFAHREN ZUR HERSTELLUNG EINES SANDWICHBAUTEILS FÜR EINE WINDENERGIEANLAGE**
METHOD FOR PRODUCING A SANDWICH COMPONENT FOR A WIND TURBINE
PROCÉDÉ DE FABRICATION EN SANDWICH D'UNE PIÈCE POUR ÉOLIENNE

(30) Priorität: 05.08.2013 DE 102013215384
(43) Veröffentlichungstag der Anmeldung: 05.04.2017
(62) Teilanmeldung aus: 14739411.8
(73) Patentinhaber: Wobben Properties GmbH, 26607 Aurich (DE)
(72) Erfinder: Hoffmann, Alexander, 26721 Emden (DE)
(74) Vertreter: Eisenführ Speiser

(56) Entgegenhaltungen:
- EP-A1- 0 577 409
- WO-A1-94/19176
- WO-A1-2013/083172
- DE-A1- 10 336 461
- DE-U1- 20 314 845
- US-A- 4 789 577
- US-A1- 2005 238 832
- US-A1- 2012 301 654
- US-A1- 2013 108 837
- US-A1- 2013 171 381

## Beschreibung

Verbundformteile sind Formteile aus zwei oder mehr miteinander verbundenen Materialien, die als Körper mit festen geometrischen Abmaßen hergestellt sind. Die im Verbund auftretenden Materialien weisen meist funktionale Eigenschaften auf, insbesondere zweckgebunden hinsichtlich ihres Einsatzgebietes. Für die Eigenschaften des erhaltenen Werkstoffes sind stoffliche und unter Umständen auch geometrische Eigenschaften der einzelnen Komponenten von Bedeutung. Dies ermöglicht es, Eigenschaften unterschiedlicher Komponenten miteinander zu verbinden, wodurch die Verbundwerkstoffe breite Anwendungsmöglichkeiten finden. Die für das Endprodukt benötigten Eigenschaften können durch die Wahl unterschiedlicher Ausgangsstoffe für die Komponenten nach Bedarf eingestellt werden.

Ein Verbundbauteil weist meist Eigenschaften auf, die unter Lasteinwirkung ein optimiertes Verhalten des Verbundformteiles darstellen. Die Eigenschaften können hinsichtlich z.B. einer gewissen Festigkeit, Steifigkeit oder Dehnbarkeit zuzuordnen sein. Ein Verbundformteil sollte unter Lasteinwirkung ein optimiertes Verhalten des Verbundes gegenüber einer Einzelkomponente des Verbundes darstellen. Die Entwicklung von Verbundformteilen geht grundsätzlich dahin, dass die geforderten Eigenschaften in Kombination zur Lebensdauer optimiert werden, um einer langjährigen Belastung standzuhalten. Insbesondere bei Rotorblättern und anderen Teilen einer Windenergieanlage werden hohe und stark variierende Lasteinwirkungen ausgeübt, die zudem mit einem an Größe zunehmenden Teil einer Windenergieanlage ebenfalls zunehmen. Insbesondere Rotorblätter sollten der statischen als auch den auftretenden dynamischen Belastungen standhalten.

So bestehen die Rotorblätter der Windenergieanlagen heute hauptsächlich aus Faserverbundwerkstoffen, in der verstärkende Fasern, meistens als Matte, in einer Matrix eingebettet sind, meist glasfaserverstärkter Kunststoff. Ein Rotorblatt wird meist in einer Halbschalen-Sandwichbauweise hergestellt. In zunehmendem Masse kommt z.B. kohlenstofffaserverstärkter Kunststoff zum Einsatz. Die hier geforderten Eigenschaften sind zum einen ein geringes Gewicht bei relativ hoher struktureller Festigkeit, sowie verschiedene Härtegrade und eine auf die Lasteinwirkung ausgerichtete Zugfestigkeit. Glasfaserverstärkte- bzw. kohlenfaserverstärkte Materialien könnten, jedenfalls grundsätzlich und unter den obigen Gesichtspunkten, den bisherigen Einsatz von Balsaholz hinsichtlich ihrer optimierten Festigkeit ablösen.

Faserverstärkte Komponenten oder Verbundbauteile weisen Fasern in einem LaminatMaterial verteilt auf, wobei die Fasern in mindestens einer bestimmten Richtung orientiert sind, um die höherwertige Eigenschaft des Faserverbundwerkstoffes zu erreichen. Grundsätzlich jedenfalls kann man drei wirkende Phasen im Material unterscheiden: sehr zugfeste Fasern, eine zunächst jedenfalls relativ weiche, einbettende Matrix und eine die beiden Komponenten verbindende Grenzschicht. Die Fasern können typischerweise aus Glas, Kohlenstoff, Keramik aber auch Aramid, Nylonfasern, Betonfasern, Naturfasern oder Stahlfasern bestehen. Die einbettende Matrix selbst, meist Polymere, hat eine materialspezifische Biegesteifigkeit, hält die Fasern in ihrer Position überträgt Spannungen zwischen ihnen und schützt die Fasern vor äußeren mechanischen und chemischen Einflüssen. Die Grenzschicht dient der Spannungsübertragung zwischen den beiden Komponenten. Problematisch bei faserverstärkten Verbundbauteilen sind mögliche Rissbildungen der jeweiligen Fasern in den beanspruchten Bereichen des Bauteils; diese können aufgrund von vor allem Biegemomente infolge einer erhöhten dynamischen mechanischen Belastung entstehen.

Wickelverfahren -wie für eine toroidale Leichtbaustruktur eine Fahrradfelge in US 2012/0301654 A1 oder einen Druckkörper in WO2013/083172-- sind an sich bekannt, wobei infolge der dort verwendeten Wickelträger für eine Einzelfaser zur Aufbringung auf eine Kernstruktur Faserorientierungen vorgegeben sind.

Nachteile solcher Wickelverfahren sind grundsätzlich auch bei größeren Strukturen immanent; US 2013/0171381 A1 beschreibt ein Sandwichkernmaterial für ein Sandwichlaminat zur Verwendung in einem Windturbinenrotorblatt. Das Sandwichkernmaterial umfasst eine Anzahl von flexiblen Kernmaterialelementen mit einer longitudinalen Struktur. Beispielsweise kann das flexible Kernmaterialelement ein Schaummaterial eines inneren Kernelements aufweisen und eine Anzahl von Faser-Rovings, die zu einer Schnurwicklung kombiniert werden können. Das Schaummaterial des inneren Kernelements kann mit einem Mischer zum Mischen einer Schaumzusammensetzung hergestellt sein und einer Wickelmaschine über eine Schaumzuführleitung zur Verfügung gestellt werden. Dies kann beispielsweise über einen Extruder realisiert werden, welcher das Schaummaterial des inneren Kernelements extrudiert durch Koextrusion zugleich mit den Faser-Rovings, die um das koextrudierte, innere Kernelement gewickelt werden. Das resultierende tauartige Gebilde hat eine fasergewickelte Schnürstruktur, die sich als geeignet erweist, um in der Produktion von Faserkernmaterialien oder einem Sandwichlaminat verwendet zu werden.

US 4,789,577 betrifft Multi-Kanal-Strukturen niedriger Dichte aus Kompositwerkstoff und ein Herstellungsverfahren dafür. Eine Anwendung betrifft luftfahrttaugliche Rahmen für Leichtflugzeuge, die nicht korrodieren und gute mechanische Eigenschaften haben. Eine solche Multi-Kanal-Struktur mit laminiertem Harz umfasst ein zelluläres Gewebe, das eine Reihe von parallelen Führungen definiert, wobei in jede derselben eine eingepasste röhrenförmige Extrusion eingesetzt wird. Dieses Halbprodukt wird zwischen externe Verstärkungslagen gesetzt. Das zelluläre Gewebe und die Verstärkungslagen werden in ein vernetzbares Harz eingebettet. Die Funktion des zellulären Gewebes besteht darin, die Röhren zu gruppieren in dem Halbprodukt als eine Schicht, die fertig für eine weitere Handhabung ist.

US 2005/0238832 A1 beschreibt eine flexible Schlauchhülse zum Transportieren von Fluiden, die eine polymere innere tubulare Struktur aufweist; nämlich mit einer inneren Oberfläche zum Transportieren des Fluids und einer äußeren Oberfläche, auf welcher eine Verstärkung angebracht ist und auf welcher wiederum eine äußere Schutzbedeckung um das Verstärkungsteil angebracht ist. Der Verstärkungsteil kann als eine Spiralwicklung oder als ein verknüpftes Muster gewickelt werden. Es kann in der Konstruktion mit natürlichen oder synthetischen Fasern oder Metalldrähten gebildet sein. Das insofern zur Verfügung gestellte Verstärkungsteil bietet strukturelle Integrität für die Schlauchhülse und erhöht Druck- und Punktwiderstand, wie auch Vorteile, welche bislang nicht bekannt waren.

Faserverstärkte Komponenten oder Verbundbauteile mit jeweils einer bestimmten Anzahl von Fasern in einem Laminat- oder Matrixmaterial verbessern jedoch die mechanische Leistung der jeweiligen Komponenten erheblich. Für materialspezifische Kenngrößen wie Schubsteifigkeit und Biegesteifigkeit sowie die Konzentrierung der Fasern in eine definierte Richtung, können die mechanischen Stützeigenschaften der jeweiligen Komponenten im Einzelnen gezielt eingestellt werden, insbesondere in Bezug auf die Zugfestigkeit des jeweiligen des Verbundes. Ein Faktor zur Bemessung von Faserverbundwerkstoffen ist das Volumenverhältnis zwischen Fasern und Matrix. Je höher der Anteil an Fasern ist, desto fester, jedoch auch spröder wird der Verbundwerkstoff. Neben der Zugfestigkeit kann, falls der Verbund auf Druck beansprucht wird, auch die Schub- und Biegesteifigkeit eine Rolle spielen. Insbesondere ist zudem grundsätzlich bekannt, dass durch einen sogenannten sandwichartigen Verbundaufbau mit einem Kern und einer oder zwei Deckschichten --dem Prinzip eines T-Trägers folgend-- eine hohe mechanische Steifigkeit des Verbundes erreicht werden kann mittels einem mäßig schubsteifen Kern und wenigstens einer vergleichsweise biegesteifen Deckschicht wobei der Verbund gleichwohl in Leichtbauweise realisiert werden kann.

Rotorblätter einer Windenergieanlage sind in der Regel aus faserverstärkten Bauteilen aufgebaut; meist mit hauptsächlich Glas- und/oder Kohlefasern in einem harzartigen Laminat-Matrixmaterial. Solche oder andere Fasern können in oder entlang der Längsachse des Rotorblattes orientiert sein, wobei das genaue Ausrichten der Fasern meist schwierig zu kontrollieren ist. Grundsätzlich kann aber ein Rotorblatt optimiert werden hinsichtlich der anstehenden Flieh- bzw. Gravitationskräfte während des Betriebs. Die Orientierung der Fasern ist in der Tat in Abhängigkeit vom Herstellungsprozess beeinflussbar. Dabei kann es entscheidend sein, welche Art von Faserhalbzeugen verwendet wir; diese können Gewebe, Gelege, Matten, Rovings aber auch Füllstoffe, Stücke, Nadeln oder Pigmente umfassen. Die Verfahren zur Herstellung des Faserverbundbauteiles sind vielfältig. Derzeit sind Verfahren umfassend Handlegeverfahren, Prepreg-Technologien, Vakuuminfusionsverfahren, Faserwickelverfahren, Spritzgussteile, Faserspritzen, Spritzpressteile, Strangziehteile und auch Sheet Molding Compounds (CMC), bekannt. Beispielsweise werden Spritzgussteile im kostengünstigen Spritzgussverfahren hergestellt, in dem typischerweise Glasfasern zum Einsatz kommen.

In DE 103 36 461 wird ein Verfahren zur Herstellung eines Rotorblattes in einer Faserverbundbauweise beschrieben, in der die äußere Kontur eines Rotorblatts bildenden Schalen hergestellt werden und die Tragstrukturen aus Fasersträngen mit vorgegebener Länge hergestellt werden, die entsprechend getränkt wurden mit einem aushärtenden Verbundwerkstoff und die Tragstrukturen in den Schalen transportiert werden.

US 4,242,160 stellt ein Verfahren vor, in dem ein einteiliges faserverstärktes Rotorblatt aus gebundenen inneren und äußeren faserverstärkten Schalen besteht. Die innere Hülle wird durch Verbinden von getrennt ausgebildeten rohrförmigen Hälften hergestellt. Die äußere Schale wird auf der Außenseite der Innenschale, vorzugsweise durch Aufwickeln einer Vielzahl von Windungen von faserverstärkten Epoxidharz-Material, gebaut.

Ein hohes Maß an Genauigkeit zur Positionierung und Orientierung der Fasern garantiert das Faserwickelverfahren, insbesondere als eine Technik zum Ablegen von Endlosfasersträngen (Rovings) auf eine zumindest annähernd zylindrische Form, die über weitere Verfahrensschritte getränkt und ausgehärtet werden. Zum Wickeln der Fasern ist der Körper des Bauteils die spätere Form des Faserverbundwerkstoffes. Beim Faserwickeln unterscheidet man zusätzlich noch zwischen den verlorenen und wiederverwendbaren Kernen, wobei der verlorene Kern ein funktionales Bauteil der Konstruktion sein kann.

In US 2012/0261864 wird ein Verfahren vorgestellt, bei dem ein Fasermaterial auf die Formoberfläche gelegt wird, ähnlich zu einem negativen Bild einer faserverstärkten herzustellenden Struktur. Dabei werden die Bündel des Fasermaterials derart auf die Oberfläche gelegt und ausgerichtet, dass durch ein Anlegen eines niedrigen Druckes eine Bereitstellung einer faserverstärkten Struktur erfolgt.

Bei einer Hochleistungsverbundstruktur werden Faservorformlinge mit Harz injiziert und es werden beanspruchungsgerechte, kostengünstige Faservorformlinge (so genannte preforms) für endlosfaserverstärkte Verbundbauteile hergestellt. Diese preforms sind "tailored" im Sinne von beanspruchungsgerechten Faserorientierungen, lokalen beanspruchungsgerechten Faseranhäufungen und Außenkonturen. Die so hergestellten Vorformlinge können mit herkömmlichen Fertigungsprozessen zu Bauteilen in der sogenannten Autoklav-Prepreg-Bauweise verarbeitet werden.

Das deutsche Patent- und Markenamt hat in der Prioritätsanmeldung folgenden Stand der Technik recherchiert: DE 43 00 208 A1, DE 103 36 461 A1, DE 10 2012 201 262 A1, EP 0 402 309 A1, EP 0 697 275 A2, EP 0 697 280 A1, EP 1 992 472 A1 und WO 94/19176 A1.

An dieser Stelle setzt die Erfindung an, deren Aufgabe es ist, ein verbessertes Verfahren zur Herstellung eines Verbundformteiles anzugeben, das hinsichtlich des Standes der Technik verbessert ist, wenigstens aber eines der oben beschriebenen Probleme zu adressieren. Zumindest soll eine alternative Lösung zu einer im Stand der Technik bekannten Lösung vorgeschlagen werden. Insbesondere hinsichtlich des Herstellungsverfahrens soll eine einfache und kontrollierbare Möglichkeit geboten werden, ein Verbundformteil herzustellen. Insbesondere soll wenigstens eine optimierte Eigenschaft des Verbundformteils hinsichtlich der statischen und dynamischen Belastungen dargestellt werden. Insbesondere soll das Herstellungsverfahren und das Verbundformteil mit orientierten und entsprechend gerichteten Fasern den angreifenden Kräften in verbesserter Weise entgegenwirken. Zudem soll das Herstellungsverfahren und ein Verbundformteil bzw. ein Sandwichbauteil, ein Rotorblattelement und eine Windenergieanlage ein optimiertes Schichtsystem verwenden, welches prozesstechnisch und/oder materialspezifisch eine verbesserte Funktionsweise ermöglicht. Insbesondere sollen das Verbundbauteil und das Verfahren eine langfristige und den Lasteinwirkungen entgegen gerichtete Steifigkeit und/oder Festigkeit ermöglichen, vorzugsweise unter Erhöhung sowohl der Biege- als auch Schubsteifigkeit.

Die Aufgabe hinsichtlich des Herstellungsverfahrens wird durch die Erfindung mit einem Verfahren des Anspruchs 1 gelöst.

Vorzugsweise richten sich die Fasern mit einem Faserwinkel um 45° mit einem Varianzbereich von +/-5° zueinander aus.

Gemäß Anspruch 1 ist das Fasersystem ein Flechtwerk oder Flechtgebilde, be dem sich mehrere Stränge aus biegsamen und insofern als solches flexibles Material umfassend Fasermaterial ineinanderschlingen, oder ein Gestricke, bei dem sich biegsames und insofern als solches flexibles Material umfassend Fasermaterial mit sich selbst verschlingt; auch maschenbildende Fadensysteme wie Gewirke sind möglich. Möglich sind darüber hinaus auch gewebeartige Strukturen, bei denen die Stränge --zwar weniger bevorzugt aber möglich-- ganz oder teilweise rechtwinklig oder annähernd zu 90° zueinander geführt sind, vorzugsweise in einem Kreuzungspunkt einen Faserwinkel aufweisen, der --bevorzugt zwischen 10° und 90°-- erfindungsgemäß zwischen 30° und 60° beträgt, vorzugsweise sich die Fasern mit einem Faserwinkel um 45° mit einem Varianzbereich von +/-10° zueinander ausrichten bzw. bei einem bestimmten anderen Faserwinkel sich mit einem Varianzbereich von +/-5° zueinander ausrichten.

Erfindungsgemäß sind demnach solche Arten eines Strangsystems besonders bevorzugt, deren Faserwinkel sich zudem variabel einstellen lässt, insbesondere selbsttätig variabel einstellt, je nach Größe und Form des einzubringenden formgebenden Kernmaterials. Gemäß Anspruch 1 ist demnach ein flexibles und variabel formbares flechtgebildeartiges Fasersystem mit variablem Faserwinkel. Gewisse Fasersystem unterstützen diese Eigenschaft besonders gut, nämlich ein flechtgebildeartiges Fasersystem, das ausgewählt ist aus der Gruppe bestehend aus: Flechtwerk, Gestrick, Gewirk.

Die Erfindung führt auf ein bevorzugtes Rotorblattelement und eine bevorzugte Windenergieanlage, die nicht unter den Gegenstand des Schutzbegehrens fallen.

Das Sandwichbauteil, das nicht unter den Gegenstand des Schutzbegehrens fällt, beinhaltet mindestens eines, insbesondere eine Vielzahl der Verbundformteile, zur Bildung eines Kernbauteils. Das Kernbauteil ist zumindest einseitig, bevorzugt zweiseitig, abgedeckt von mindestens einer Deckschicht. In einer Weiterbildung ist das Kernbauteil des Sandwichbauteils mit kraftaufnehmenden Decklagen abgedeckt, die durch einen Kernwerkstoff des Kernbauteils auf Abstand gehalten werden. Die vorliegende Weiterbildung ermöglicht, die zuvor genannten Eigenschaftskombination mit endlichen Maximalwerten bei geringem Gewicht in einem Sandwichbauteil zu integrieren, welches in der Summe bei höheren Lasteinwirkungen, meist ein linearer Zuwachs der Nennwerte, dauerfest entgegenwirkt. Insbesondere weist das Sandwichbauteil eine verbesserte Schub- und Biegesteifigkeit auf, infolge des flechtgebildeartigen Fasersystems, das im Verbund mit dem formgebenden Kernmaterial sich kreuzende Fasern aufweist, die sich zueinander ausrichten, und die in einem Kreuzungspunkt einen Faserwinkel aufweisen, der zwischen 30° und 60° beträgt, insbesondere wobei sich die Fasern mit einem Faserwinkel um 45° mit einem Varianzbereich von +/-5° zueinander ausrichten

Es beinhaltet das Rotorblattelement mindestens ein, insbesondere eine Vielzahl von Verbundformteilen als Kernmaterial. Diese Weiterbildung intergiert ein optimiertes Verbundformteil in ein Rotorblatt, insbesondere im Herstellungsprozess in eine Halbschale desselben; dadurch kann eine verbesserte Dauerfestigkeit, insbesondere eine verbesserte Druckfestigkeit bzw. eine verbesserte Schub- und Biegesteifigkeit zu erzielen. Auf diese Weise ist das Rotorblatt optimiert hinsichtlich der anstehenden Flieh- bzw. Gravitationskräfte während des Betriebs. Dabei ist durch die Verwendung dieses Verbundbauteiles eine Rissminimierung bzw. für eine minimierte Rissfortpflanzung aufgrund des formgebenden Kerns als thermoplastischer Kunststoff erreicht.

Eine Windenergieanlage weist einen Turm, eine Gondel und einen Rotor mit einer Rotornabe und einer Anzahl von Rotorblättern auf, wobei das Rotorblatt mindestens ein Rotorblattelement gemäß dem Konzept der Erfindung aufweist und/oder der Turm, die Gondel und/oder die Rotornabe ein Sandwichbauteil gemäß dem Konzept der Erfindung aufweist.

Da durch die immer größere Dimensionierung der Rotorblätter auch für das strukturdynamische Verhalten der Rotorblatter immer größere Lasten zu erwarten sind, kann diesem durch die materialspezifischen Kenngrößen des Verbundbauteils gemäß dem Konzept der Erfindung entgegengewirkt werden.

Grundsätzlich kommt das Konzept der Erfindung allgemein bei einem Verbundformteil zum Tragen. Es hat sich ein Sandwichbauteil mit dem Verbundformteil als vorteilhaft erwiesen, das gemäß dem Herstellungsverfahren gemäß dem Konzept der Erfindung hergestellt ist.

Die Erfindung geht von der Überlegung aus, dass ein Faserverbundwerkstoff wie er im Stand der Technik beschrieben ist, der Lasteinwirkung entgegenwirken kann. Höhere Anforderungen an ein Verbundbauteil bzw. größere geometrische Dimensionierungen bestimmter Verbundbauteile wie z. B. Rotorblätter, bedingen eine neue Herangehensweise an ein Verbundbauteil, wobei auch Ressourcen und Effizienz bei einem Herstellungsverfahren zu berücksichtigen sind. Insbesondere ist mit dem flechtgebildeartigen Fasersystem im Verbund mit dem formgebenden Kernmaterial eine höhere Biege- und Schubsteifigkeit beim Verbundformteil erreicht, da dieses sich kreuzende Fasern aufweist, die sich zueinander ausrichten und die in einem Kreuzungspunkt einen Faserwinkel aufweisen, der zwischen 30° und 60° beträgt, vorzugsweise sich die Fasern mit einem Faserwinkel um 45° mit einem Varianzbereich von +/-5° zueinander ausrichten.

Die Erfindung hat erkannt, dass bei dem Verbundformteil des Sandwichbauteils, nach der Art eines Faser- Matrix-Verbundbauteils, die Festigkeit und Steifigkeit wesentlich höher in der Faserrichtung ist, als quer zur Faserrichtung. Da die Einwirkung der Lasten, wie Zug oder Druck jedoch nicht immer senkrecht zu Flächennormalen ist, wäre die Wirkung von bloß in einer Richtung orientierten Fasern im Faserverbundbauteil eher limitiert. Die Erfindung sieht eine funktionelle Orientierung von sich kreuzenden Fasern vor, die Kraft bzw. Lasteinwirkung auf das Bauteil in der Fläche minimiert. dazu ist erfindungsgemäß vorgesehen, dass sich die kreuzenden Fasern zueinander ausrichten und in einem Kreuzungspunkt einen Faserwinkel aufweisen, der zwischen 30° und 60° beträgt, vorzugsweise sich die Fasern mit einem Faserwinkel um 45° mit einem Varianzbereich von +/-5° zueinander ausrichten.

Aufgrund der sich variabel zueinander ausrichtenden Fasern kann das Verfahren, mit dem dieses orientierte Verbundformteil hergestellt wird, technisch einfach und kostengünstig durchgeführt werden.

Die funktionale Ausrichtung ermöglicht es, ein lastorientiertes Verbundformteil herzustellen, welches das Verfahren des Verteilens des formgebenden Kernmaterial erhält und das Ausbildung einer äußeren Schicht als Funktionsschicht ermöglicht. Diese Schicht zeichnet sich als Funktionsschicht aus, da sie durch die funktionale Ausrichtung der Fasern der Lasteinwirkung entgegensteht. Die gerichtete Fasernlagenanordnung von sich kreuzenden Fasern führt zu einer konstruktiven Erhöhung der mechanischen Eigenschaften und kann den Anforderungen an ein Verbundformteil entsprechen.

Insgesamt geht die Erfindung von der Überlegung aus, dass eine einstellbare Steifigkeit durch die Wahl eines geeigneten, flexiblen Flechtgebilde-artigen Fasersystems und dessen Verbund mit dem thermoplastischen Kunststoff möglich ist. Dabei werden duktile Eigenschaften der Matrix --der thermoplastische Kunststoff-- als formgebendes Kernmaterial kombiniert mit den Eigenschaften der äußeren Funktionsschicht --das verbundene funktional zueinander ausgerichtete Flechtgebilde-artige Fasersystem--, welches vor allem die Festigkeit, insbesondere die Bruchfestigkeit erhöht.

Die Erfindung geht weiter von der Überlegung aus, dass durch die Verwendung eines flexiblen flechtgebildeartigen Fasersystems eines Faserverbundhalbzeuges eine richtungsorientierte Flecht-, Maschen-, Gewirke-, oder dergleichen Faserstruktur zur Verfügung gestellt werden kann, die sich --insbesondere beim Einbringen einer Matrix oder dergleichen formgebendes Kernmaterial, insbesondere beim Herstellungsverfahren-- in einer der Form des Kernmaterial entsprechenden Art und Weise ausrichten kann, um somit die Funktionsschicht maßgeblich einzustellen auf dem Kernmaterial. Insbesondere mittels einem formveränderbaren flechtgebildeartigen Fasersystems mit einer Flecht-, Maschen-, Gewirke-, oder dergleichen Faserstruktur ist dies der Fall, wobei der Flecht-, Maschen-, Gewirke-, oder dergleichen Faserstruktur mit Verändern ihrer Form sich im Kreuzungspunkt der Fäden jeweils ein veränderbarer Faserwinkel einstellt, der - insbesondere zwischen 10° und 90° liegen kann-- erfindungsgemäß zwischen 30° und 60° liegen kann, insbesondere zwischen 40° und 50° liegen kann, insbesondere bei dem sich die Fasern mit einem Faserwinkel um 45° mit einem Varianzbereich von +/-5° zueinander ausrichten. Dies führt bei einem schlauchartigen zwei- oder dreidimensionalen flechtgebildeartigen Fasersystem zu einem aufweitbaren variablen Querschnitt, sodass die gesamte Struktur unabhängig von einem etwaig biegsamen oder flexiblen Fasermaterial aufweitbar, dehnbar und kontrahierbar ist beim Einbringen des formgebenden Kernmaterials. Vorteilhaft sind im Bereich von wenigstens 2:1 bis zu 6:1, insbesondere im Bereich von 4:1 dehnbare Öffnungsquerschnitte, insbesondere bei einem Geflecht- oder Gewebeschlauch.

Durch eine selbst einstellbar belassene Wahl der gerichteten Fasernlagenordnung und der Fasern an sich kann die Steifigkeit bzw. die Druckbeständigkeit der äußeren Schicht beeinflusst werden. Die Erfindung ermöglicht insbesondere auch ein Verfahren, welches kostengünstig ist, kontrollierbar ist und darüber hinaus eine verbesserte Realisierung eines funktionalen Verbundformteiles. Durch die gegenseitigen Wechselwirkungen, insbesondere selbst aufeinander sich einstellende Formen, der beiden Komponenten Kernmaterial und flechtgebildeartiges Fasersystem und deren Verhältnisse zueinander, erhält das Verbundbauteil eine besonders optimierte Eigenschaftskombination, um eine hohe Lebensdauer bei statischen und dynamischen Lasteinwirkungen zu erreichen.

Ein weiterer Vorteil liegt darin, dass durch die Kombination zweier Materialien im Kernmaterial und flechtgebildeartiges Fasersystem, spezifische Materialkenngrößen eingestellt werden können; die beiden Materialien können unabhängig zueinander optimiert werden. So stellt die Matrix nur den inneren Kern dar ohne zusätzliche, weitere Funktionen wie Verankerungen, Erosions- und Korrosionsschutz aufnehmen zu müssen.

Anders als bei bisher üblicher Anwendung von Faserverbundwerkstoffen ist hier die Faser die äußere Funktionsschicht, die einen formgebenden Kern bedeckt. Dabei schützt diese Funktionsschicht den Kern und erweitert somit die mögliche Produktpalette der thermoplastischen Kunststoffe hin zu weniger beständigen Sorten. Da die Matrixkomponente nur als formgebender Kern die Auflagefläche darstellt, kann durch den jeweilig eingestellten Durchmesser des Kerns der Anteil der spezifischen Materialeigenschaften verändert werden.

Das flechtgebildeartige Fasersystem kann spezifisch lokal durch die Wahl der Fasern, der lokalen Dichte und einer Kombination von verschiedenen Fasern der jeweiligen Lasteinwirkung, die meist bauteilbedingt lokal unterschiedlich ist, entgegenwirken. Durch die entsprechende Dichte und die im Verbund ausgebildete Trennschicht kann eine Schutzschicht entstehen und gleichzeitig eine Kräfteübertragung zum Inneren des Kerns.

Besonders vorteilhaft lässt sich das Verfahren durch die funktionale Zueinander-Ausrichtung im 45°-Winkel darstellen, da die Ausrichtung in einem Kräfteparallelogramm der einwirkenden Last entgegen gerichtet ist. Dabei liegt dem Mechanismus die Überlegung zugrunde, dass die Normalkomponenten der horizontal und vertikal wirkenden Kraftanteile in einem Parallelogramm aufgeteilt werden. Die Ausrichtung der Fasern ist somit der einwirkenden Kraft bzw. Last entgegen gerichtet. Die Ausrichtung durch den bevorzugten 45°-Faserwinkel am Kreuzungspunkt oder einem anderen geeigneten Faserwinkel gemäß dem Konzept der Erfindung kann eine erhöhte einwirkende Last an der Oberfläche aufgenommen werden bzw. dieser kann entsprechend entgegengewirkt werden. Gleichzeitig ist der bevorzugte 45°-Winkel, bzw. die Ausrichtung des flechtgebildeartigen Fasersystems im 45°-Winkel, so gesehen als ideal angesehen werden, um besonders hohe Torsions- bzw. Schubfestigkeiten zu erreichen.

Gemäß Anspruch 1 wird ein Verbundformteil hergestellt, wobei ein thermoplastischer Kunststoff als formgebendes Kernmaterial in einem flexiblen flechtgebildeartigen Fasersystem eines Faserverbundhalbzeuges verteilt und verbunden ist, wobei das flechtgebildeartige Fasersystem --im Verbund mit dem formgebenden Kern-- Fasern aufweist, die funktional zueinander ausgerichtet sind, im Faserwinkel zwischen 30° und 60°, und wobei das ausgerichtete flechtgebildeartige Fasersystem im Verbund eine äußere Funktionsschicht des Verbundformteiles darstellt. Insbesondere weist das Verbundformteil der bevorzugten Weiterbildung eine funktionale Ausrichtung im Winkel von 45° auf. Damit bietet die Erfindung ein Verbundformteil, welches vergleichbar ist mit Faserverbundbauteilen, in dem Falle jedoch mit einer funktionalen Orientierung zur äußeren Schicht, die somit eine ausgerichtete Festigkeit bewirkt. Die ausgerichteten Fasern in einem Winkel zwischen 30° und 60° bzw. vorzugsweise in einem Winkel von 45° bewirken, dass die einwirkende Last, in dem Falle Zug oder Druck, durch die entgegen gerichteten Kräfte des Kräfteparallelogramms mikromechanisch aufgefangen werden. Zudem ermöglicht das zunächst flexible flechtgebildeartige Fasersystem große Variationen des formgebenden Kernmaterials. Ein Herstellungsprozess ist dann nicht mehr gebunden an der technischen Realisierung des Faserverbundbauteils, sondern kann die Form des Kerns entsprechend der Anwendung anpassen. Durch die Weiterbildung ist ein funktionales, in der Form frei wählbares Formteil entwickelt worden. Die schützende Faser des Faserverbundhalbzeuges weist einen engen Verbund mit dem formgebenden thermoplastischen Kunststoff mit funktionalen Eigenschaften auf, die sich aus den Materialkenngrößen des thermoplastischen Kunststoffes und des flexiblen flechtgebildeartigen Fasersystems zusammensetzt. Darüber hinaus weist dieses Verbundformteil durch das flechtgebildeartige Fasersystem eine zusätzliche Funktion auf, das gerichtete Entgegenwirken spezifischer Lasten.

In der Erfindung kann ein thermoplastischer Kunststoff in dem flexiblen flechtgebildeartigen Fasersystem des Faserverbundhalbzeuges verteilt und stoffschlüssig verbunden sein; dies bietet eine Möglichkeit, dass sich die Komponenten --der thermoplastische Kunststoff und das Faserverbundhalbzeug-- chemisch adhäsiv oder kohäsiv verbinden können. Die dadurch erreichte Wirkung ist ein optimiertes Schichtsystem, welches die einwirkenden Kräfte leichter verteilen kann, da über einen stoffschlüssigen Verbund eine geringere Grenzfläche zur leichteren Flächenkräfteübertragung ausgebildet wird. Die Komponenten werden durch atomare oder molekulare Kräfte zusammengehalten. Sie sind somit nicht lösbare Verbindungen, die sich nur durch die Zerstörung des Verbindungsmittels trennen lassen. Eine stoffschlüssige Verbindung bewirkt einen Verbund, der keine weiteren Kräfte bei Lasteinwirkung erfährt. Die äußere funktionale Schicht --das ausgerichtete flechtgebildeartige Fasersystem-- kann durch den Verbund seine Funktionsweise effektiv entfalten. Die Weiterbildung kann eine Zusatzkomponente im flechtgebildeartigen Fasersystem bedeuten, die den ausschließlich Stoffschluss bedingt, oder die einzelnen Fasern können in sich die stoffschlüssigen Verbindungen mitbringen. So können auch getränkte Fasern des flexiblen flechtgebildeartigen Fasersystems diesen Stoffschluss begünstigen. Alternativ wäre auch eine Vakuuminfusionsherstellung denkbar. Diese stoffschlüssige Verbindung erweist sich hinsichtlich des Angriffs bei korrosiven und abrasiven Medien als vorteilhaft.

In der Erfindung kann der thermoplastische Kunststoff in dem flexiblen flechtgebildeartigen Fasersystem des Faserverbundhalbzeuges verteilt und formschlüssig verbunden sein; dies ermöglicht einen Formschluss zwischen dem thermoplastischen Kunststoff und dem Faserhalbwerkzeug. Hierbei kann der formgebende Kern bereits Oberflächenkavitäten aufweisen. Dabei müssen Kavitäten in der Art gestaltet sein, dass durch einwirkende Kräfte die Gegenkraft der äußeren Schicht nicht überschritten wird, um den Verbund aus seinem Formschluss wieder zu lösen. Gleichzeitig wäre es auch denkbar, dass in dieser Weiterbildung der thermoplastische Kunststoff in der Art verteilt wird, dass das flexible flechtgebildeartige Fasersystem einsinken kann und durchdrungen wird. Dadurch wird eine mechanische Verankerung, welches in dem Fall den Formschluss darstellt, ermöglicht. Die Kombination aus einem stoff- und einem formschlüssigen Verbund vereint beide positiven Aspekte und ist durch diese Weiterbildung denkbar.

Erfindungsgemäß wird der thermoplastische Kunststoff in das flexible flechtgebildeartige Fasersystem des Faserverbundhalbstoffes extrudiert. Das Verfahren weist die Schritte auf, dass der thermoplastische Kunststoff aus einem Extruder als Strang zur Verfügung gestellt wird, und das flexiblen flechtgebildeartige Fasersystem als schlauchförmiges flechtgebildeartiges Fasersystem zur Verfügung gestellt wird. Es ist weiter vorgesehen, dass der thermoplastische Kunststoff als formgebendes Kernmaterial in dem flexiblen flechtgebildeartigen Fasersystem des Faserverbundhalbzeuges verteilt wird, indem es als weicher Strang, nämlich aus dem Extruder, in den Schlauch des flechtgebildeartigen Fasersystems eingebracht, nämlich einextrudiert wird, und unter Verfestigung des weichen Strangs einen Verbund mit dem flechtgebildeartigen Fasersystem ausbildet als äußere Funktionsschicht des Verbundformteils.

Dies bietet die Möglichkeit, dass ein thermoplastischer Kunststoff als formgebendes Kernmaterial in das flexible flechtgebildeartige Fasersystem hineingetrieben wird und sich in diesem verteilt. Auch denkbar ist, dass ein Strang einer festen bis dickflüssigen thermoplastischen Kunststoffmasse unter Druck kontinuierlich aus der formgebenden Öffnung hinaus gepresst wird in das flexible flechtgebildeartige Fasersystem eines Faserverbundhalbzeuges. Dabei entsteht bei der formgebenden Öffnung ein entsprechender Körper in theoretisch beliebiger Länge und kann somit das flexible flechtgebildeartige Fasersystem entsprechend ausrichten. Hierbei ist der Querschnitt der Öffnung entsprechend dem Durchmesser des flechtgebildeartigen Fasersystems anpassbar und ermöglicht die Ausrichtung durch Strecken oder Stauchen des flexiblen flechtgebildeartigen Fasersystems hin zur funktionalen Ausrichtung der Fasern im Verbund.

Eine Extrusionstechnik ist ein an sich bekanntes Verfahren, das darüber hinaus jedoch synergetisch genutzt werden kann, um den weichen Strang, insbesondere aus dem Extruder, in den Schlauch des flechtgebildeartigen Fasersystems einzubringen, insbesondere einzuextrudieren, d.h. direkt aus dem Extruder.

Dies erlaubt zudem eine leichte Realisierung, die eine kontrollierbare und kostengünstige Variante zur Herstellung des in einem Schichtsystem funktionalen Verbundformteiles erlaubt. Zudem ermöglicht die Verwendung des Extrusionsverfahrens für das entsprechende Verbundformteil eine Realisierung komplexer Formen, die gleichzeitig das Hineinpressen in das flexible flechtgebildeartige Fasersystem realisieren kann. Die Ausrichtung der Fasern kann durch das Formgebilde selbst erfolgen. Letztendlich ermöglicht diese Weiterbildung auch ein Verfahren bei höheren Temperaturen, die den Verbund, sei es stoff- und/ oder formschlüssig, begünstigt.

Es erhöht sich durch zusätzliche Fasern im Flächengebilde, unabhängig vom Winkel, die Festigkeit, insbesondere zudem Biege- und Schubsteifigkeit, des Verbundformteiles. Die Weiterbildung berücksichtigt, dass die funktionale Ausrichtung dem Kräfteparallelogramm der einwirkenden Last entgegenwirkt, jedoch bei weiteren Kräften, bzw. unterschiedlich wirkenden Kräften, können weitere Fäden, die in eine andere Richtung verlaufen, zusätzliche Kräfte aufnehmen und die Steifigkeit bzw. Festigkeit des Verbundformteiles erhöhen. Somit wird die Funktionsweise der äußeren Schicht des Verbundformteiles hinsichtlich der anliegenden Kräfte optimiert und hat eine größere Toleranz bezüglich der einwirkenden Kräfte. Gleichzeitig ermöglicht dies auch eine höhere Steifigkeit an den Kanten bzw. Ecken des Verbundformteiles durch die Bündelung zusätzlicher Fäden. Zudem kann die Ausrichtung der Fasern durch zusätzliche fasern gesteuert werden und verdichtet die durch das flechtgebildeartige Fasersystem gebildete Funktionsschicht.

Ein flechtgebildeartiges Fasersystem in Form eines Schlauches kann eine zweidimensionale Flechtstruktur haben. Dies ermöglicht den formschlüssigen Verbund ohne Kantenoder Spalteffekte der äußeren Funktionsschicht. Schwachstellen in der äußeren Funktionsschicht können durch die Form eines Schlauches minimiert werden und ermöglichen gleichzeitig bei dem Herstellungsverfahren einen einfachen Prozessschritt der gleichmäßigen Verteilung und die homogene Ausrichtung des Verbundbauteils mit der äußeren Funktionsschicht.

Es kann das flechtgebildeartige Fasersystem die Form eines Schlauches mit einer dreidimensionalen Flechtstruktur haben und zusätzliche Fasern im Inneren des Verbundes besitzen, die funktional zueinander ausgerichtet sind, im Faserwinkel zwischen 30° und 60°, bevorzugt 45°. Dies nimmt einen zusätzlichen Aspekt auf, der bereits in den Faserverbundwerkstoffen realisiert ist, dass innenliegende Strukturen zusätzliche Festigkeit bedingen. Durch die Aufnahme einer dreidimensionalen Flechtstruktur können funktionale Kräfte auch aus dem Inneren der Matrix des formgebenden Kernmaterials generiert werden. Eine Ausrichtung der Fasern ist in grundsätzlich verschiedenster Form möglich; jedoch bevorzugt ist die Aufnahme einer Last mit bei einem Faserwinkel im Bereich 45°+/- 5°-Winkel; insbesondere für hohe Torsions- bzw. Schubkräfte ist dieser Winkel geeignet. Dies ermöglicht es zusätzlich, den thermoplastischen Kunststoff in seiner materialspezifischen Eigenschaft zu optimieren hinsichtlich der einwirkenden Kräfte, ohne zusätzliches Gewicht zu bedingen. Hierbei sind vor allem stoffschlüssige Verbundmöglichkeiten denkbar.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

In einer besonders bevorzugten Weiterbildung ist der thermoplastische Kunststoff mindestens eine Komponente der Gruppe Acrylnitril-Butadien-Styrol, Polyamide, Polylacetat, Polymethylmethacrylat, Polycarbonat, Polyethylenterephthalat, Polyethylen, Polypropylen, Polystyrol, Polyetheretherketon und Polyvinylchlorid aufweist. Durch die Wahl des Herstellungsprozesses der Verteilung kann die jeweilige Thermoplaste bzw. Komponente oder eine Mischung derselben, z. B. in einem Batch-Prozess, mit ihrer materialspezifische Eigenschaft genutzt werden, um für das jeweilige Verbundformteil die geforderten Eigenschaften einzustellen. Darüber hinaus kann eine Mischung verschiedener thermoplastischer Kunststoffe in homogener und/oder lokal verschiedener Verteilung unterschiedlicher thermoplastischer Kunstoffe vorteilhaft sein. Beispielsweise kann eine erste Anzahl von Verbundformteilen und eine zweite Anzahl von Verbundformteilen eingesetzt werden zur Darstellung eines einzigen Sandwichbauteils bzw. Rotorblattelements oder eine erste Anzahl von Verbundformteilen und eine zweite Anzahl von Verbundformteilen eingesetzt werden zur Darstellung eines ersten und zweiten Sandwichbauteils bzw. Rotorblattelements, die in einem Rotorblatt, einem Turm, einer Gondel und/oder einer Rotornabe als Kernbauteil eingebaut werden; die erste und zweite Anzahl von Verbundformteilen können unterschiedliche Kernmaterialien und/oder flechtgebildeartige Fasersysteme aufweisen.

In einer Weiterbildung kann ein flexibles flechtgebildeartiges Fasersystem mindestens eine Komponente aufweisen aus der Gruppe bestehend aus: Glasfasern, Kohlefasern, Aramidfasern, Naturfasern, Metallgarne, Mono- oder Multifile Fäden, insbesondere Thermoplastfäden oder allgemein Kunststofffäden aus Nylon, PET, Poloypropylen oder dergleichen Kunststoff aufweisen. Eine Wahl einer einzigen oder einer Kombination aus einer oder mehreren verschiedenartigen steifen Fasern kann genutzt werden, um Eigenschaften des Verbundformteils spezifisch zu beeinflussen und/oder einen Stoffschluss zum Kernmaterial zu begünstigen. Vorteilhaft sind vergleichsweise hohe Schmelzpunkte der Materialien, insbesondere der Kunststoffe, bei oder oberhalb von 200°C und eine UV-Beständigkeit.

Eine Verstärkung des thermoplastischen Kunststoffes durch zusätzliche innenliegende funktional gerichtete Fasern erweist sich als vorteilhaft. Dadurch und dergleichen Maßnahmen können zusätzlich zur Verfestigung des Verbundformteils eingesetzt werden. Entsprechenden Wirkmechanismen bzw. berechnete Kraftmomente der Fasern --wie zum Beispiel Glasfasern und/oder Kohlefasern-- können genutzt werden, aber auch ein dreidimensionales flechtgebildeartiges Fasersystem, in das sich der thermoplastische Kunststoff entsprechend verteilt. Diese können eine bestimmte Orientierung aufweisen und entsprechend des Herstellungsprozesses integriert werden.

Unter einem dreidimensionalen flechtgebildeartigen Fasersystem ist ein flechtgebildeartiges Fasersystem zu verstehen, dessen zweidimensionale Oberfläche durch eine flechtende, wirkende, strickende oder sonst maschenbildende oder dergleichen flechtgebildeartigen Anbindung von zusätzlichen Fasern, insbesondere regelmäßigen Verteilung von flechtgebildeartig angebundenen Fasern, dreidimensional vernetzt ist, insbesondere über einen offenen Querschnitt eines Geflecht- oder Gewebeschlauches hinweg. Insofern ist ein dreidimensionales flechtgebildeartiges Fasersystem zu unterscheiden von einem zweidimensionalen flechtgebildeartiges Fasersystem, das eben, schlauchförmig, insbesondere in Form eines Geflecht- oder Gewebeschlauches - mit runden oder eckigen oder eckig abgerundeten Schlauch-Querschnittsformen - oder gewölbt, ganz oder teilweise offen gewölbt, sein kann und das in Kombination mit zusätzlich lose eingestreuten Fasern verwendet werden kann.

Ausführungsbeispiele der Erfindung werden nun nachfolgend anhand der Zeichnungen im Vergleich zum Stand der Technik, welcher z.B. ebenfalls dargestellt ist, beschrieben. Diese soll die Ausführungsbeispiele nicht notwendigerweise maßgeblich darstellen, vielmehr als die Zeichnung, wozu Erläuterungen dienlich, in schematisierter und/oder leicht verzerrter Form ausgeführt. Im Hinblick auf Ergänzungen der aus der Zeichnung unmittelbar erkennbaren Lehren, wird auf den einschlägigen Stand der Technik verwiesen.

Bei angegebenen Bemessungsbereichen sollen auch hier innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnungen.

Im Einzelnen zeigt die Zeichnung in:
- Fig. 1A: eine schematische Darstellung einer Ausführungsform eines Verbundformteils, wobei der thermoplastische Kunststoff hier als Quader mit einem bevorzugten flexiblen Flechtgebilde dargestellt ist;
- Fig. 1B: eine schematische Darstellung einer weiteren Ausführungsform eines Verbundformteils, wobei der thermoplastische Kunststoff als ein zylindrisches Gebilde umgeben von einem strumpfartigen Flechtgebilde dargestellt ist;
- Fig. 2: eine schematische Darstellung der einwirkenden Last auf eine obere Funktionsschicht in Form eines Flechtgebildes eines Verbundformteils;
- Fig. 3A: einen schematischen Querschnitt eines Verbundformteils in noch einer bevorzugten Ausführungsform, wobei der formgebende Kern als thermoplastischer Kunststoff und die darüber liegende äußere Funktionsschicht als flexibles Flechtgebilde dargestellt ist;
- Fig. 3B: einen schematischen Querschnitt eines Verbundformteils in noch einer bevorzugten Ausführungsform, wobei der formgebende Kern als thermoplastischer Kunststoff dargestellt ist und die darüber liegende äußere Funktionsschicht als flexibles Flechtgebilde die Form eines Schlauches mit einer dreidimensionalen Flechtstruktur hat;
- Fig. 3C: einen schematischen Querschnitt eines Verbundformteiles in noch einer bevorzugten Ausführungsform mit integrierten funktional gerichteten Fasern;
- Fig.4: eine vereinfachte Querschnittsdarstellung eines Rotorblatts einer Windenergieanlage mit einem Verbundformteil gemäß einer bevorzugten Ausführungsform;
- Fig. 5: eine Windenergieanlage;
- Fig. 6: ein Ablaufdiagramm einer bevorzugten Ausführungsform eines Herstellungsverfahrens gemäß dem Konzept der Erfindung.

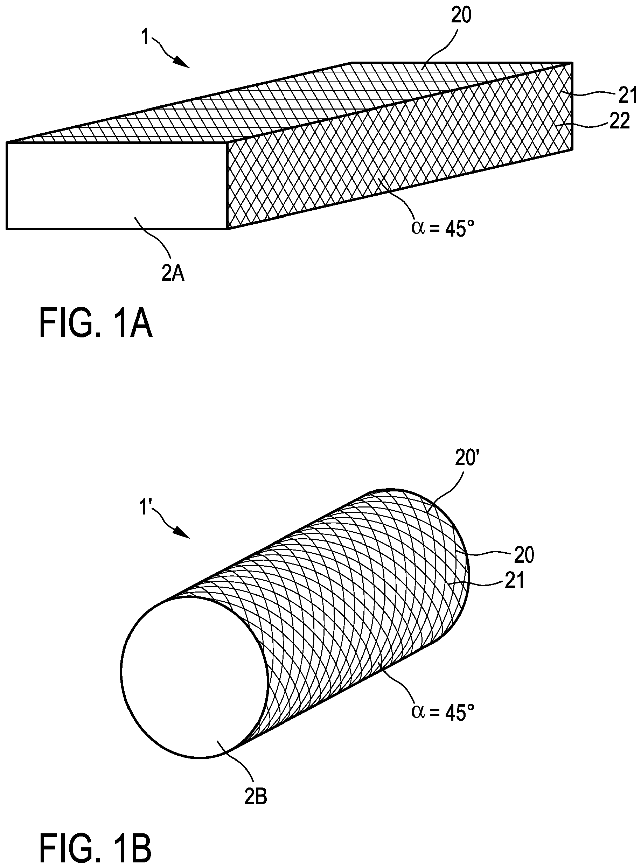

In den Fig. 1 bis Fig. 4 sind für gleiche oder ähnliche Teile oder Teile gleicher oder ähnlicher Funktionen der Einfachheit halber gleiche Bezugszeichen benutzt worden.

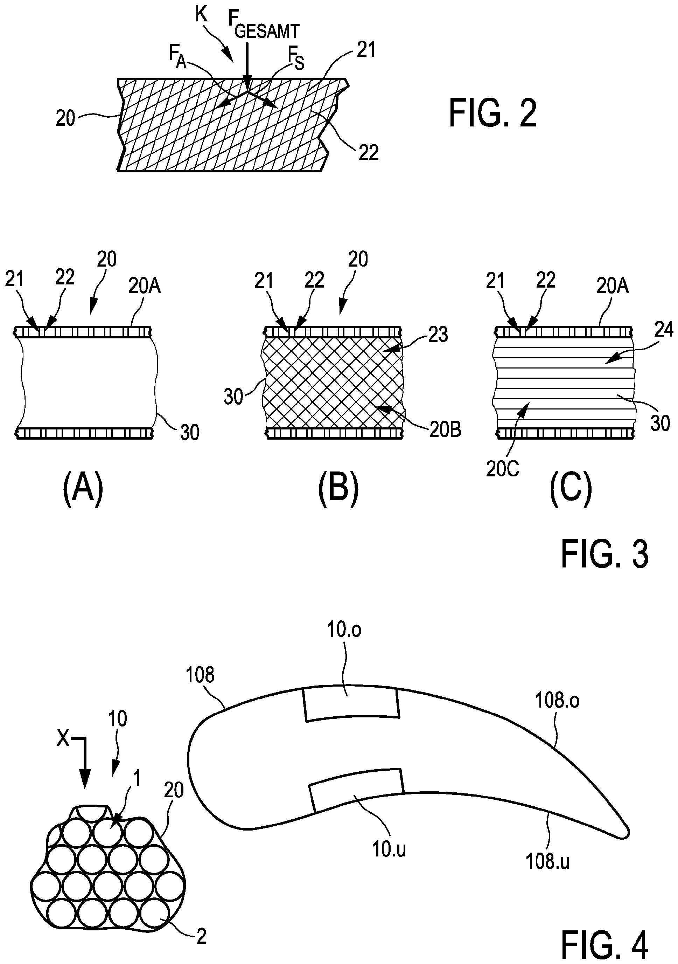

Fig. 1A zeigt ein Verbundformteil 1 welches in Form eines Quaders als formgebendes Kernmaterial 2A abgebildet ist. Dabei umschließt das Flechtgebilde 20, in diesem Fall eine zu einer Quaderaußenummantelung geschlossene Geflechtmatte aus Glasfasern, diesen Quader und zeigt ausgerichtete Fasern im funktionalen Faserwinkel α zueinander von 45°. Die einzelnen Fasern 21 und Fasern 22 zeigen dabei den α = 45° Faserwinkel und bilden auf der Fläche ein funktionales Kräfteparallelogramm, das in Bezug auf Fig.2 näher erläutert ist. Dabei ist in dieser Darstellung eine gleichmäßige Verteilung der Fasern gegeben. Es wäre jedoch auch denkbar, dass --z.B. in Abhängigkeit einer Belastungsverteilung-- die Fasern 21, 22 unterschiedlich aufgeweitet werden. So könnte eine funktionale Ausrichtung in lokal dichteren Flechtstrukturen in den Bereichen auftreten wo auch eine höhere Last einwirkt. Die Form des thermoplastischen Kunststoffes kann bereits, dieses begünstigend, als formgebendes Kernmaterial dienen. Durch die Wahl der Flechtstrukturen und deren Dichte lassen sich auch Zentren oder allgemein Bereiche höherer Krafteinwirkung verstärken.

Fig. 1B zeigt analog ein Verbundformteil 1' einer anderen Ausführungsform; in diesem Falle wurde der formgebende thermoplastische Kunststoff 2B in Form eines Zylinders dargestellt, der von einem flexiblen Flechtgebilde 20' umgeben wird; in diesem Falle ein Geflechtschlauch aus PET. Die ausgerichteten Fasern entsprechen hier dem im Anspruch 1 genannten 45°-Winkel und sind so einander funktional ausgerichtet, um damit eine äußere Funktionsschicht darzustellen.

In Fig. 2 ist schematisch eine von außen einwirkende Kraft F_{GESAMT} --in diesem Fall eine Zugkraft-- dargestellt mit den daraus resultierenden Normalkräften F_{A} und F_{S}, die sich in einem Kräfteparallelogramm K aufteilen. Die ausgerichteten Fasern 21 und 22 als äußere Funktionsschicht wirken hier den Normalkräften entgegen und bilden in der Ebene eine funktionale Schicht, die der Kraft entgegenwirkt. Die Fasern des Flechtgebildes können der einwirkenden Kraft F_{GESAMT} mit einer erhöhten Festigkeit des Verbundsystems entgegenwirken, ohne dass eine Faser 21 einer Querbelastung nachgeben könnte, da diese durch die Faser 22 aufgenommen wird. Hierbei können auch weitere Schubkräfte oder Transferkräfte durch die äußere Funktionsschicht aufgefangen werden und in dem Verbundformteil mit entsprechenden materialspezifischen Eigenschaften minimiert werden.

In Fig. 3A zeigt schematisch in einem Querschnitt ein Verbundformteil, in dem in der äußeren Schicht 20A einer zweidimensionalen Struktur eines flechtgebildeartigen Fasersystems dargestellt ist; hier mit einem ausgerichteten Flechtgebilde 20 aus Fäden 21 und 22 um einen Materialkern aus thermoplastischen Kunststoff 30 auf.

In Fig. 3B ist eine dreidimensionale Ausrichtung eines flechtgebildeartigen Fasersystems dargestellt, das neben der äußeren funktionellen Schicht 20A auch innerhalb mit Fäden 23 einer des formgebenden Kernmaterials 30 ausgerichtet ist und somit eine dreidimensionale Wirkungsstruktur 20B gegen äußere Lasteinwirkung bildet.

In Fig. 3C sind Längsfasern 24 im Inneren des Kerns den thermoplastischen Kunststoff 30 abgebildet, die zusätzlich zu der äußeren funktionalen Schicht 20A mit den Fasern 21, 22 im 45°-Winkel eine Faserkombination 20C zum Schutz gegen äußere Lasteinwirkungen darstellen und zusätzliche Schub- und Torsionsspannungen aufnehmen können.

In Fig. 4 ist ein Rotorblatt 108 für eine Windenergieanlage 100 vereinfacht im Querschnitt dargestellt. Dieses Rotorblatt 108 umfasst eine obere Halbschale 108.o und eine untere Halbschale 108.u, wobei in diesen Schalen Tragstrukturen 10.o und 10.u vorgesehen sind, welche die am Rotorblatt angreifenden Lasten aufnehmen und abtragen können. Diese Tragstrukturen können durch Rotorblattelemente, zum Beispiel in einer Sandwichbauweise, bzw. durch besagte Verbundformteile ausgebildet werden, um eben diese entsprechenden Lasten aufzunehmen. Das Detail X der Fig. 4 zeigt eine solche Tragstruktur 10 mit einer Vielzahl von Verbundformteilen 1, aus einem Kernmaterial 2 umgeben von einem flexiblen, flechtgebildeartigen Fasersystem 20, die - hier beispielhaft - in dichtester Packung zur Tragstruktur 10 zusammengesetzt sind.

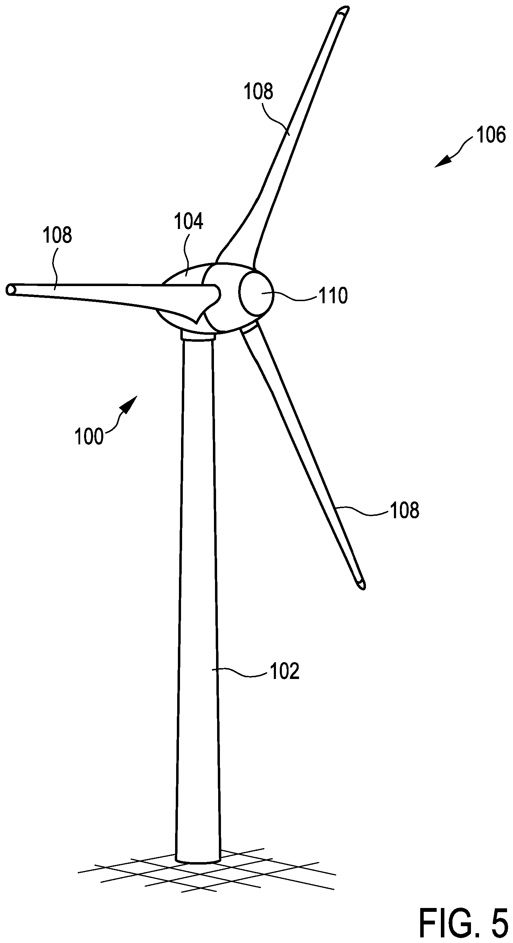

Fig. 5 zeigt eine Windenergieanlage 100 mit einem Turm 102 und einer Gondel 104. An der Gondel 104 ist ein Rotor 106 mit drei Rotorblättern 108 --etwa analog in der Art eines Rotorblatts 108 der Fig. 4-- und einem Spinner 110 angeordnet. Der Rotor 106 wird im Betrieb durch den Wind in eine Drehbewegung versetzt und treibt dadurch einen Generator in der Gondel 104 an.

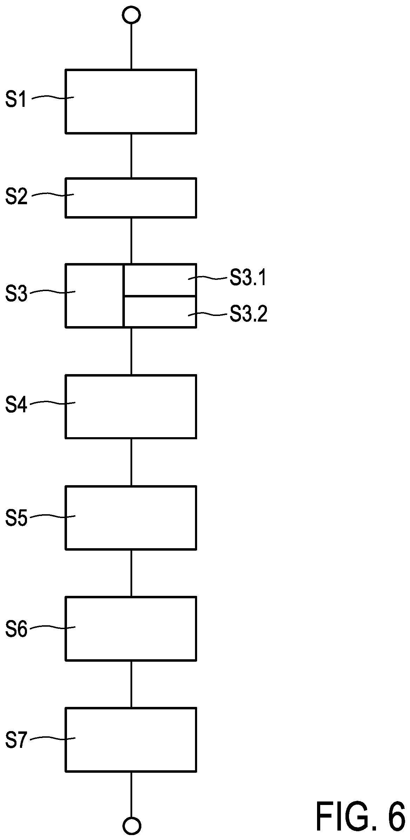

Fig. 6 zeigt im Rahmen eines Flussdiagramms eine bevorzugte Ausführungsform eines Herstellungsverfahrens für ein Verbundformteil 1 bzw. ein Assemblieren einer Vielzahl derselben zu einer Tragstruktur 10 zur Einbringung in ein Rotorblatt 108 einer Windenergieanlage 100. In einem ersten Schritt S1 wird ein thermoplastischer Kunststoff und in einem Schritt S2 wird ein Faserverbundhalbzeug in Form eines Flechtgebildes in der zuvor erläuterten Art zur Verfügung gestellt.

In einem dritten Schritt S3 wird der thermoplastische Kunststoff als formgebendes Kernmaterial in dem flexiblen Flechtgebilde eingebracht und darin verteilt, so dass er sich mit dem Flechtgebilde verbindet. Im vorliegenden Fall wird in einem Schritt S3.1 der thermoplastische Kunststoff aus einer Granulatmischung einem Extruder zugeführt und in einem Schritt S3.2 am Ausgang des Extruders als weicher Strang in einen Geflechtschlauch direkt eingebracht. Der Geflechtschlauch weist sich kreuzende Fasern auf, die an einem Kreuzungspunkt einen Faserwinkel von 45° haben und dieser zieht sich um das noch weiche formgebende Kernmaterial wenn dieses sich abkühlt. Dadurch verfestigt sich das weiche formgebende Material um oder an dem Geflechtschlauch bzw. an den Fasern desselben, so dass ein Verbund zwischen Gelechtschlauch und dem thermoplastischen Material entsteht, mit dem Geflechtschlauch ggfs. vollständig oder jedenfalls teilweise, aber nicht notwendigerweise, an der Außenseite desselben; das weiche formgebende Material kann innerhalb der Konturen des Geflechtschlauches verbleiben oder auch durch das Geflecht ganz oder teilweise nach außen dringen; also im letzteren Fall herausquellen und ggfs. sogar sich außen wieder um den Geflechtschlauch legen und diesen umschließen.

Der insgesamt als Unendlichstrang produzierbare Verbundstrang kann in einem Schritt S4 in eine Vielzahl von Verbundformteile je nach Bedarf geteilt werden und etwa in der im Detail X der Fig. 4 gezeigten Art in einem Schritt S5 zu einer Tragstruktur zusammengesetzt werden. Die Tragstruktur kann in einem Schritt S6 in eine Halbschale eines Rotorblatts 108 oder in ein anderes Teil einer Windenergieanlage 100 eingebracht werden. Im vorliegenden Fall werden die Halbschalen zu einem Rotorblattrohling assembliert und den weiteren Fertigungsschritten unterzogen bis das Rotorblatt in einem Schritt S7 an einer Windenergieanlage 100 der Fig. 5 gezeigten Art angebracht werden kann.

## Patentansprüche

1. Verfahren zur Herstellung eines Sandwichbauteils für eine Windenergieanlage (100) unter Verwendung einer Vielzahl von Verbundformteilen (1, 1') zur Bildung eines Kernbauteils, insbesondere einer Tragstruktur (10), wobei das Kernbauteil zumindest einseitig abgedeckt ist von mindestens einer Deckschicht, und ein Verbundformteil (1, 1') für die Windenergieanlage einen thermoplastischen Kunststoff und ein Faserverbundhalbzeug aufweist, wobei in dem Verfahren das Kernbauteil unter Verwendung der Vielzahl von Verbundformteilen (1, 1') gebildet wird und zumindest einseitig abgedeckt wird von der mindestens einen Deckschicht und das Verfahren die weiteren Schritte aufweist:
- zur Verfügung stellen des thermoplastischen Kunststoffs und des Faserverbundhalbzeugs mit einem flexiblen, flechtgebildeartigen Fasersystem,
- Verteilen des thermoplastischen Kunststoffs als formgebendes Kernmaterial in dem flexiblen flechtgebildeartigen Fasersystem des Faserverbundhalbzeuges und Verbinden mit dem flechtgebildeartigen Fasersystem, wobei
- das Fasersystem ausgewählt ist aus der Gruppe bestehend aus: Flechtwerk, Gestricke, Gewirke, Gewebe, wobei
- das flexible, flechtgebildeartige Fasersystem variabel formbar ist und im Verbund mit dem formgebenden Kernmaterial sich kreuzende Fasern aufweist, die sich zueinander ausrichten, und
- die in einem Kreuzungspunkt einen sich variabel einstellenden Faserwinkel aufweisen, der zwischen 30° und 60° beträgt, und wobei
- das flechtgebildeartige Fasersystem im Verbund die äußere Funktionsschicht des Verbundformteils bildet, wobei
- der thermoplastische Kunststoff, nämlich aus einem Extruder, als Strang zur Verfügung gestellt wird, und
- das flexible, flechtgebildeartige Fasersystem als schlauchförmiges flechtgebildeartiges Fasersystem zur Verfügung gestellt wird, wobei
- der thermoplastische Kunststoff als formgebendes Kernmaterial in dem flexiblen, flechtgebildeartigen Fasersystem des Faserverbundhalbzeuges verteilt wird, indem es als weicher Strang, nämlich aus einem Extruder, in den Schlauch des flechtgebildeartigen Fasersystems eingebracht wird, nämlich extrudiert wird, und
- unter Verfestigung des weichen Strangs einen Verbund mit dem flechtgebildeartigen Fasersystem ausbildet als äußere Funktionsschicht des Verbundformteils, wobei sich der thermoplastische Kunststoff in dem flexiblen, flechtgebildeartigen Fasersystem des Faserverbundhalbzeuges verteilt und stoffschlüssig und/oder formschlüssig mit dem flexiblen, flechtgebildeartigen Fasersystem verbindet.

2. Verfahren nach Anspruch 1, **dadurch gekennzeichnet, dass** sich die Fasern mit einem Faserwinkel um 45° mit einem Varianzbereich von +/-5° zueinander ausrichten.

3. Verfahren nach einem der vorstehenden Ansprüche, **dadurch gekennzeichnet, dass** das flechtgebildeartigen Fasersystem ein schlauchartiges zwei- oder dreidimensionales flechtgebildeartigen Fasersystem mit einem aufweitbaren variablen Querschnitt ist, sodass die gesamte Struktur unabhängig von einem etwaig biegsamen oder flexiblen Fasermaterial aufweitbar, dehnbar und kontrahierbar ist beim Einbringen des formgebenden Kernmaterials im Bereich von wenigstens 2:1 bis zu 6:1.

4. Verfahren nach einem der vorherigen Ansprüche, **dadurch gekennzeichnet, dass** zusätzliche Fasern im flechtgebildeartigen Fasersystem und/oder thermoplastischen Kunststoff eingebracht sind und die Festigkeit des Verbundformteils erhöhen gegenüber einem Verbundformteil ohne die zusätzlichen Fasern.

5. Verfahren nach einem der vorherigen Ansprüche, **dadurch gekennzeichnet, dass** der in dem flexiblen, flechtgebildeartige Fasersystem verteilte thermoplastische Kunststoff mindestens eine Komponente der Gruppe Acrylnitril-Butadien-Styrol, Polyamide, Polylacetat, Polymethylmethacrylat, Polycarbonat, Polyethylenterephthalat, Polyethylen, Polypropylen, Polystyrol, Polyetheretherketon und Polyvinylchlorid aufweist.

6. Verfahren nach einem der vorherigen Ansprüche, **dadurch gekennzeichnet, dass** das flexible, flechtgebildeartige Fasersystem eine Flechtkomponente aufweist, die ausgewählt ist aus der Gruppe von Flechtkomponenten aufweisend: Glasfasern, Kohlefasern, Aramidfasern, Naturfasern, Metallgarne, Monofile und Thermoplastfäden.

## Claims

1. Method for producing a sandwich component for a wind turbine (100) using a multiplicity of composite mouldings (1, 1') to form a core component, in particular a load-bearing structure (10), wherein the core component is covered at least on one side by at least one cover layer, and a composite moulding (1, 1') for the wind turbine comprises a thermoplastic and a semi-finished fibre composite product, wherein, in the method, the core component is formed using the multiplicity of composite mouldings (1, 1') and is covered at least on one side by the at least one cover layer, and the method comprises the further steps:
- providing the thermoplastic and the semi-finished fibre composite product comprising a flexible, braiding-like fibre system,
- distributing the thermoplastic as shaping core material in the flexible, braiding-like fibre system of the semi-finished fibre composite product and connecting it to the braiding-like fibre system, wherein
- the fibre system is selected from the group consisting of: braidwork, drawn-loop knitted fabrics, formed-loop knitted fabrics or woven fabrics, wherein
- the flexible, braiding-like fibre system is variably shapeable and has, in the composite with the shaping core material, intersecting fibres which are oriented with respect to one another and
- which have a variably set fibre angle of between 30° and 60° at an intersection point, and wherein
- the braiding-like fibre system in the composite forms the outer functional layer of the composite moulding, wherein
- the thermoplastic is provided as a strand, specifically from an extruder, and
- the flexible, braiding-like fibre system is provided as a tubular braiding-like fibre system, wherein
- the thermoplastic as shaping core material is distributed in the flexible, braiding-like fibre system of the semi-finished fibre composite product by being introduced, specifically extruded, as a soft strand, specifically from an extruder, into the tube of the braiding-like fibre system, and,
- with solidification of the soft strand, a composite comprising the braiding-like fibre system forms as outer functional layer of the composite moulding, wherein the thermoplastic is distributed in the flexible, braiding-like fibre system of the semi-finished fibre composite product and is connected to the flexible, braiding-like fibre system in a materially bonded and/or form-fitting manner.

2. Method according to Claim 1, **characterized in that** the fibres are oriented with respect to one another at a fibre angle of around 45° with a variance range of +/-5°.

3. Method according to either of the preceding claims, **characterized in that** the braiding-like fibre system is a tubular two-dimensional or three-dimensional braiding-like fibre system with an expandable variable cross section, such that the entire structure can be expanded, extended and contracted independently of any pliant or flexible fibre material in the range of at least 2:1 up to 6:1 during the introduction of the shaping core material.

4. Method according to one of the preceding claims, **characterized in that** additional fibres are introduced in the braiding-like fibre system and/or thermoplastic and increase the strength of the composite moulding in relation to a composite moulding without the additional fibres.

5. Method according to one of the preceding claims, **characterized in that** the thermoplastic distributed in the flexible, braiding-like fibre system comprises at least one component from the group acrylonitrile butadiene styrene, polyamides, polyacetate, polymethylmethacrylate, polycarbonate, polyethylene terephthalate, polyethylene, polypropylene, polystyrene, polyetheretherketone and polyvinyl chloride.

6. Method according to one of the preceding claims, **characterized in that** the flexible, braiding-like fibre system comprises a braided component which is selected from the group of braided components comprising: glass fibres, carbon fibres, aramid fibres, natural fibres, metal yarns, monofilaments and thermoplastic threads.

## Revendications

1. Procédé de fabrication d'un composant en sandwich pour une installation éolienne (100) en utilisant une pluralité de pièces moulées composites (1, 1') pour former un composant de noyau, notamment une structure porteuse (10), le composant de noyau étant recouvert au moins d'un côté par au moins une couche de recouvrement, et une pièce moulée composite (1, 1') pour l'installation éolienne présentant une matière thermoplastique et un semi-produit composite fibreux ; dans le procédé, le composant de noyau étant formé en utilisant la pluralité de pièces moulées composites (1, 1') et étant recouvert au moins d'un côté par l'au moins une couche de recouvrement et le procédé présentant les étapes supplémentaires suivantes :
- la mise à disposition de la matière thermoplastique et du semi-produit composite fibreux avec un système de fibres flexible de type structure tressée,
- la répartition de la matière thermoplastique en tant que matériau de noyau de formage dans le système de fibres flexible de type structure tressée du semi-produit composite fibreux et la liaison au système de fibres de type structure tressée,
- le système de fibres étant choisi dans le groupe constitué par : les tresses, les tricots, les mailles, les tissus,
- le système de fibres flexible, de type structure tressée, pouvant être formé de manière variable et présentant, dans le composite avec le matériau de noyau de formage, des fibres qui se croisent, qui s'orientent les unes par rapport aux autres, et
- qui présentent en un point d'intersection un angle de fibres s'ajustant de manière variable, qui est compris entre 30° et 60°, et
- le système de fibres de type structure tressée formant dans le composite la couche fonctionnelle extérieure de la pièce moulée composite,
- la matière thermoplastique, à savoir provenant d'une extrudeuse, étant mise à disposition sous forme de boudin, et
- le système de fibres flexible de type structure tressée étant mis à disposition sous forme de système de fibres de type structure tressée de forme tubulaire,
- la matière thermoplastique étant répartie en tant que matériau de noyau de formage dans le système de fibres flexible de type structure tressée du semi-produit composite fibreux en étant introduite, à savoir extrudée, sous forme de boudin mou, à savoir provenant d'une extrudeuse, dans le tube du système de fibres de type structure tressée, et
- en solidifiant le boudin mou, formant un composite avec le système de fibres de type structure tressée en tant que couche fonctionnelle extérieure de la pièce moulée composite, la matière thermoplastique se répartissant dans le système de fibres flexible de type structure tressée du semi-produit composite fibreux et se liant par liaison matière et/ou par complémentarité de forme au système de fibres flexible de type structure tressée.

2. Procédé selon la revendication 1, **caractérisé en ce que** les fibres s'orientent les unes par rapport aux autres avec un angle de fibres autour de 45° avec une plage de variation de +/-5°.

3. Procédé selon l'une quelconque des revendications précédentes, **caractérisé en ce que** le système de fibres de type structure tressée est un système de fibres de type structure tressée de forme tubulaire bi- ou tridimensionnel ayant une section transversale variable extensible, de telle sorte que la structure entière peut être étendue, étirée et contractée indépendamment d'un matériau fibreux éventuellement souple ou flexible lors de l'introduction du matériau de noyau de formage dans la plage d'au moins 2:1 à 6:1.

4. Procédé selon l'une quelconque des revendications précédentes, **caractérisé en ce que** des fibres supplémentaires sont introduites dans le système de fibres de type structure tressée et/ou dans la matière thermoplastique et augmentent la résistance de la pièce moulée composite par rapport à une pièce moulée composite sans les fibres supplémentaires.

5. Procédé selon l'une quelconque des revendications précédentes, **caractérisé en ce que** la matière thermoplastique répartie dans le système de fibres flexible de type structure tressée présente au moins un composant du groupe constitué par l'acrylonitrilebutadiène-styrène, les polyamides, le polyacétate, le polyméthacrylate de méthyle, le polycarbonate, le polyéthylène téréphtalate, le polyéthylène, le polypropylène, le polystyrène, la polyéther-éther-cétone et le polychlorure de vinyle.

6. Procédé selon l'une quelconque des revendications précédentes, **caractérisé en ce que** le système de fibres flexible de type structure tressée présente un composant tressé, qui est choisi dans le groupe de composants tressés présentant : les fibres de verre, les fibres de carbone, les fibres d'aramide, les fibres naturelles, les fils métalliques, les monofilaments et les fils thermoplastiques.
